# EUROPEAN PATENT SPECIFICATION

(11) **EP 2 872 459 B1**
(45) Date of publication and mention of the grant of the patent: **13.09.2017**
(21) Application number: 12731194.2
(22) Date of filing: 27.01.2012
(51) Int. Cl.: C04B 11/00, C04B 11/05, B01D 17/02, B01J 20/04, B01J 20/28, E01C 11/00

(54) **HYDRAULIC BINDER BASED ON CALCIUM SULPHATE, PROCESS FOR PRODUCING THE SAME AND SPECIFIC USES THEREOF**
HYDRAULISCHES BINDEMITTEL AUF BASIS VON CALCIUMSULFAT, VERFAHREN ZU SEINER HERSTELLUNG UND SPEZIFISCHE VERWENDUNGEN DAVON
LIANT HYDRAULIQUE À BASE DE SULFATE DE CALCIUM, PROCÉDÉ DE PRODUCTION DE CE DERNIER ET APPLICATIONS SPÉCIFIQUES ASSOCIÉES

(43) Date of publication of application: 20.05.2015
(73) Proprietor: Columbeanu, Ion, 011443 Bucarest (RO)
(72) Inventor: COLUMBEANU, Adrian Irinel, 011443 Bucarest (RO)
(86) International application number: PCT/RO2012/000002
(87) International publication number: WO 2013/112060

(56) References cited:
- WO-A1-2007/066167
- WO-A1-2010/003827
- WO-A2-2005/000766
- WO-A2-2007/065527
- FR-A1- 2 952 635
- COMODI P ET AL: "The dehydration process of gypsum under high pressure", PHYSICS AND CHEMISTRY OF MINERALS, SPRINGER, BERLIN, DE, vol. 39, no. 1, 30 September 2011 (2011-09-30), pages 65-71, XP019995664, ISSN: 1432-2021, DOI: 10.1007/S00269-011-0460-1

## Description

The present invention relates to a new hydraulic binder based on natural or synthetic gypsum having in composition different dehydrating phases of calcium sulphate in specific ratios, said binder being used in the industry producing construction materials, as an absorbent in a process for depolluting the discharges of hydropollutants in solid and liquid environments, as well as in road building and maintenance.

The invention also relates to a process for producing this binder, to a process for depolluting the hydropollutants discharges from the solid or liquid environments by the use of the binder according to the invention as an absorbent, as well as to processes for repairing roads by employing such a binder.

More precisely, the object of the invention is a hydraulic binder based on calcium sulphate which contains stabilised soluble anhydrite III in a ratio ranging from 60% to 80% by weight, soluble anhydrite II in a ratio ranging from 10% to 30% by weight, low-soluble anhydrite II in a ratio ranging from 8% to 25% by weight and impurities ranging from 0% to 5% by weight.

The hydraulic binders based on soluble or low-soluble anhydrite belong already to the known state of the art, being known to the persons skilled in the art for their satisfactory mechanical characteristics.

Processes for the preparation of stabilised soluble anhydrite III are known, particularly from the patent applications FR 2733496, FR 2767815, FR 2804423, WO 00/47531 or WO 05/000766, these processes consisting in two successive steps:
a) heating a powdery composition based on calcium sulphate, namely natural or synthetic gypsum, in a furnace, to obtain metastable soluble anhydrite III, and
b) stablising the anhydrite III metastable phase by the application of a thermal stress.

The stabilization of soluble anhydrite III by the application of a mechanical stress onto the particles is also known, the mechanical stress being able to significantly lower the metastable character, namely the capacity of rehydratation of the soluble anhydrite III, this being disclosed particularly in the patent application WO2007/066167 and in the European patent EP 1991509, the latter being entirely included herein by reference.

The inventor of the present invention unexpectedly and surprisingly found that by adjusting the temperature and pressure parameters of the process for the stabilization of metastable soluble anhydrite III disclosed in the European patent EP 1991509, the optimum ratio of low-soluble anhydrite II is obtained, i.e from 8% to 25% by weight, range which ensures an optimum equilibrium between the shelf life of the hydraulic binder and the technical performances thereof.

The hydraulic binder according to the invention comprises stabilised soluble anhydrite III in a ratio ranging from 60% to 80%, preferably from 70% to 75% by weight.

The stabilised soluble anhydrite III is a soluble anhydrite III whose rehydration kinetics is reduced in comparison with that of the metastable soluble anhydrite III.

In the composition of the binder according to the invention, previously stabilised soluble anhydrite III can be used or it can be introduced directly metastable anhydrite III followed by stabilizing thereof by subjecting the binder composition to known stabilization processes.

The metastable soluble anhydrite III has the formula CaSO₄.εP₂O, wherein ε has a value ranging from 0.1 to 0.2 and can be obtained by dehydrating the natural or synthetic calcium sulphate (gypsum) having the formula CaSO₄.2H₂O or of the calcium sulphate β hemihydrate (for example plaster) having the formula CaSO₄H₂O, for example at a temperature ranging between 220 and 360°C.

As it is known, the metastable soluble anhydrite III is strongly hygroscopic and rehydrates quickly into calcium sulphate β hemihydrate or into traditional gypsum β, then returning to the calcium sulphate state according to the hygrometry of the air.

For example, at a relative humidity of 50-70%, the metastable soluble anhydrite III rehydrates into calcium sulphate β hemihydrate in about 12 hours, so that the binder based on metastable soluble anhydrite III has reduced storage life.

According to the invention, the hydraulic binder contains stabilized soluble anhydrite III, whose rehydration kinetics is reduced in comparison with that of the metastable soluble anhydrite III.

For example, at a relative humidity ranging from 50% to 70%, the stabilized soluble anhydrite III rehydrates into calcium sulphate β hemihydrate in a period of about five times longer than that in which the metastable soluble anhydrite III rehydrates, namely within 2-3 days.

The hydraulic binder according to the invention necessarily comprises specific ratios of anhydrite II.

The anhydrite II has the formula CaSO₄.OH₂O being characterized by particularly low hygroscopicity. This may be obtained by dehydrating the natural or synthetic calcium sulphate powder having the formula CaSO₄.OH₂O.

Starting from about 320°C, a relatively stable soluble anhydrite II phase is obtained.

The hydraulic binder according to the invention comprises soluble anhydrite II in a ratio ranging from 10% to 30% by weight, preferably between 15% and 25% by weight.

Starting from 360°C, a relatively stable low-soluble anhydrite II phase is obtained and from about 450°C, a stable insoluble anhydrite II phase, also named "overbaked" anhydrite II, is obtained.

The hydraulic binder according to the invention comprises low-soluble anhydrite II in a ratio ranging from 8% to 25% by weight, preferably from 15% to 20% by weight.

The inventor of the present invention unexpectedly and surprisingly found that by adjusting the parameters of the process for stabilizing the metastable soluble anhydrite III disclosed in the European patent EP 1991509, so that the powdery composition based on calcium sulphate should be heated to a temperature ranging between 320°C and 380°C under overpressure conditions ranging from 50 to 100 mbar, the optimum ratio of low-soluble anhydrite II, namely between 8% and 25% by weight, is obtained and that this ratio ensures an optimum equilibrium between the shelf life of the hydraulic binder and the technical performances thereof (optimum rheology, reduced porosity, increased mechanical strength, fire resistance, compatibility with the cement and lime, rapid setting, dimensional stability etc).

A ratio of a low-soluble anhydrite II of less than 8% influences defavourably the shelf life of the binder, this being reduced by 1.5 up to 2 times, while a ratio higher than 25% of low soluble anhydrite II impairs the technical performance of the binder. Preferably, the amount of low-soluble anhydrite II ranges from 15% to 20%, the ratio between shelf life and the technical performances of the binder being optimum within this range.

The impurities content in the binder composition may vary in the range from 0% to 5% by weight.

The new hydraulic binder characterized by the specific combination of ingredients in the mentioned ratios has performances superior to the known binders.

As a consequence of the experiments, the inventor ascertained that the ingredients of the hydraulic binder according to the invention, having the mentioned ratios act synergistically, providing the binder with technical performances higher than those of the mentioned hydraulic binders of the same type disclosed in the state of the art.

Particularly, the mechanical strengths obtained by using such a binder are by 10-20% better than those of the known similar binders. Also, the binder according to the invention has increased adherence to all kinds of support materials and the compositions in which this binder is used also have improved fire behaviour.

The hydraulic binder based on calcium sulphate in compliance with the invention comprises between 60% and 80%, but preferably between 70% and 75% by weight stabilized soluble anhydrite III, between 10% and 30%, but preferably between 15% and 25% by weight soluble anhydrite II, between 8% and 25%, but preferably between 15% and 20% by weight low-soluble anhydrite II, the impurities content of the binder being between 0% and 5% by weight.

Due to this specific combination of ingredients in the selected ratios, the hydraulic binder confers on the lime in contact with the air a better setting and a higher strength. Moreover, the inventions ascertained that this hydraulic binder with supercrystallized structure allows improving the technical characteristics and the extension of the fields of use when associated with traditional binders.

The hydraulic binder according to the invention also exhibits other particular characteristics in case of specialized uses, i.e. fire resistance, passive fire protection, and it allows the obtaining of insulating materials with low thermal conductivity, of light materials with low density, materials with rapid setting and short drying, materials with high adherence and compatibility with any kind of support.

This binder may be used in many ways, having performances superior to the traditional cements. Its compatibility with the gypsum and lime when associated with cement is total.

The material containing the hydraulic binder according to the invention has a complex rheology adequate to any type of work and allows to achieve mortars, concretes, self-leveling blankets, but also for making other materials with good mechanical performances such as stretching and compression resistance, flexibility, materials that are dimensionally stable, without swells or shrinkages, having high finishing qualities at extreme temperatures (cold or heat), allowing, among other things, the application of any type of colour. Also, the material containing the hydraulic binder according to the invention may be also hydrated with salty water.

Moreover, the hydraulic binder according to the invention enhances the action of auxiliary substances, such as polycarboxylates in base solution, allowing the spectacular increase of the mechanical performances of the binder.

In the presence of low-soluble anhydrite II within the range from 15% to 20% in the binder composition, the compression strength exceeds 85 Mpa. The hydraulic binder according to the invention may also improve the characteristics of the calcium hydroxide.

The object of the invention is a process for manufacturing the hydraulic binder, characterized by the steps of:
a) introducing the powdery composition based on calcium sulphate into an impacting conduit containing overheated air;
b) heating the said composition to a temperature ranging from 320°C to 380°C, preferably 350°C in conditions of overpressure from 50 to 100 mbar, preferably from 60 to 80 mbar and more preferably at 75 mbar;
c) impacting the binder particles against the conduit walls, by a warm air stream flowing through the conduit with an air flow velocity ranging from 10 to 25 m/s, preferably 20 m/s.

The calcium sulphate used as a starting material may be natural or synthetic calcium sulphate. As an example of synthetic calcium sulphate also named industrial calcium sulphate there may be used sulphogypsum, phosphogypsum, titanogypsum, borogypsum etc. These types of synthetic gypsum are wastes resulting from various industrial processes, such as the process for desulphurizing the smoke resulting from coal burning in power plants (sulphogypsum) or the process of manufactirng chemical fertilizers (phosphogypsum).

The inventors ascertained that the heating of the powdery composition of calcium sulphate to a temperature ranging from 320°C to 380°C in conditions of overpressure from 50 to 100 mbar determines the obtaining of the intended ratios of anhydrite as particles with an original crystalline morphology and a reduced specific surface. In conditions of overpressure from 60 to 80 mbar, the metastability of anhydrite III particles is additionally reduced so that the obtained hydraulic binder requires a smaller amount of water for rehydration.

The water vapours resulting after dehydrating the calcium sulphate in conditions of overpressure of the overheated air, contribute to increasing the thermal conductivity of the particles, facilitating the heat exchange inside the ore.

The impacting conduit has such a configuration that the binder particles entrained by the warm air stream may hit the walls thereof.

Fig. 1 is a schematic representation of an embodiment of an installation adequate for producing the hydraulic binder in compliance with this process of the invention.

Figure 2 is a photograph taken with the electronic microscope on a sample of binder particles obtained by the described process.

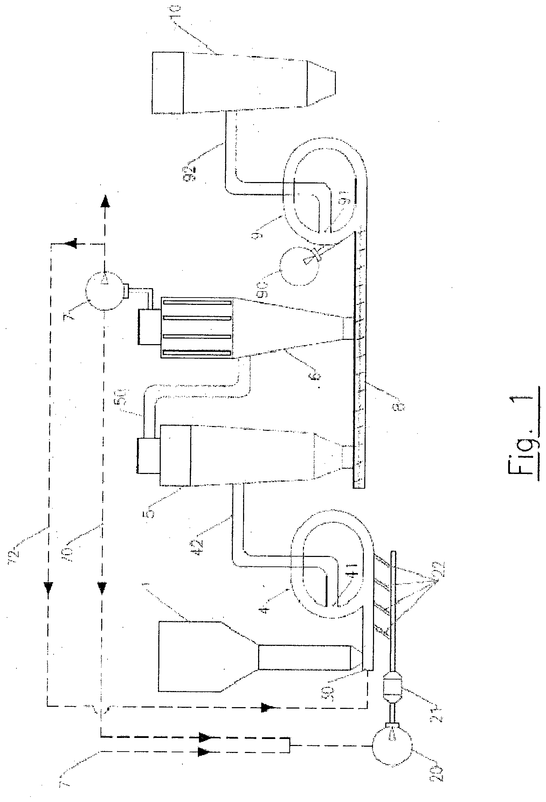

In order to apply the process, an installation as represented in Fig.1 may be employed. Within this installation, in a silo (1) a powdery composition based on natural or synthetic calcium sulphate is stored. This powdery composition is heated to 320°C- 380°C, preferably 350°C, within a time interval which may last from a few seconds to may hours. The heating temperature and time depend on more factors, of which the most important are: grain size distribution and type of powdery composition to be treated and the heating process employed, respectively. By adjusting the calcination parameters, it is possible to adjust the ratios of stabilized soluble anhydrite III, soluble anhydrite II and low-soluble anhydrite II.

Experimenting the process, the applicant ascertained that up to about 320°C only the calcium sulphate β hemihydrate is obtained. In the range from 320°C to 380°C, the mixture contains anhydrite III and anhydrite II in the claimed ratios, the calcium sulphate β hemihydrate not being present. This mixture confers on the hydraulic binder very good mechanical properties and at the same time an optimum shelf life.

The heating device is represented by a "flash" calciner consisting of an air turbine (20) which blows air into a burner (21). The powdery composition is injected into a conduit (30) provided with warm air injectors (22), the mixture being transported with a high speed by the warm air stream generated this way (20 - 25 m/s); the injectors (22) are positioned so as to create turbulence and to favour the heat exchange.

The conduit (30) is continued with an impacting conduit (4) so that during the movement, the particles hit against the walls of the conduit. The particles are projected onto the surface of the conduit walls with a velocity of 10 - 25 m/s, preferably 20 m/s, the impact determining the stabilization of the metastable phase of the anhydrite III particles; the impacting velocity determines the percentage of stabilized anhydrite III and this velocity is selected depending on the size and nature of the particles to be stabilized.

The turbine (20) associated to burner (21) allows the generation of a warm air stream with a certain velocity. The synthesis of anhydrite III and anhydrite II by the joint and simultaneous action of thermal stresses at a high temperature and of some mechanical stresses of high velocity ensures the hydraulic binder cohesion.

Preferably, the impacting conduit (4) has a toroidal shape so as to determine the change of the direction of particle movement and the hitting of the walls of the conduit. The discharge orifice (41) of the impacting conduit (4) is arranged on the inner face of this conduit, this shape ensuring the selective collection of particles of the desired diameter.

Due to the centrifugal forces generated in the impacting conduit (4), particles with a higher diameter and with higher weight, are directed to the outer wall of the conduit, hitting the same and being broken up. Only particles of small diameter and small weight reach the discharge orifice (41) being recovered therefrom.

Unless the particles reach the desired diameter, they cannot reach the outlet diameter (41) and continue to circulate inside the impacting conduit (4).

According to the installation represented in Fig. 1, the discharge orifice (41) of the impacting conduit (4) is connected through a conduit (42) to a separator for separating water vapours from solid particles (5). Practically, it is about a cyclonic filter wherein the solid particles are directed towards the lower side thereof, and the water vapours towards the upper side. Preferably, the recovered water vapours are directed through a conduit (50) towards a second filter (6) having the role to recover the residual fine particles. This second filter (6) is connected to the vapour extraction device (7), of an air pump type.

For increasing the energetic output of the installation, it is possible to supply the turbine (20) with warm air (70) recovered by the vapour extraction device (7), the recovered air (70) being mixed with fresh air (71).

The solid particles obtained in the impacting conduit (4) and/or the separator (5) and/or in the second fiter (6) may be directed through a transport conduit (8) by means of an Arechimedean screw towards a second impacting conduit (9) connected to a source of compressed air (90).

The second impacting conduit (9) is similar to the one described previously and functions in the same way.

The compressed air allows the entraining of the hydraulic binder particles in the conduit (9) so that these particles hit the walls of conduit (9) with an adecquate velocity. In practice, cold compressed air at a pressure of 2 - 15 bar may be injected. Thus, the particles are broken up by mechanical shock in order to reduce their diameter, the obtained binder having a grain size distribution of 1- 10 micron.

The discharge orifice (91) of the impacting conduit (9) is connected by means of a conduit (92) to a tank (10), wherein the thus conditioned hydraulic binder is stored, before being packed.

According to the invention, the powdery composition based on calcium sulphate is heated in the presence of overheated air, in conditions of overpressure.

The inventors of the present invention ascertained that the binder heating in the presence of air overheated to a temperature in the range from 320°C to 380°C and in conditions of overpressure from 50 to 100 mbar, preferably from 60 to 80 mbar, determines the obtaining of the optimum ratio of low-soluble anhydrite II, the particles of anhydrite in the binder composition thus obtained having an original crystalline morphology, with a reduced specific surface. The metastability of the particles of anhydrite III is also significantly reduced in comparison with that of the particles of anhydrite III obtained in other conditions of temperature and overpressure. The thus obtained hydraulic binder needs a much smaller amount of water for rehydration. Furthermore, the overheated water vapours resulting from the dehydration of calcium sulphate and the overpressure conditions determine the increase of thermal conductivity of the particles, facilitating the heat exchange within the ore.

With refrence to Fig. 1, inside the impacting conduit (4) there exists air overheated in conditions of overpressure and water vapours resulting from the dehydration of calcium sulphate.

It is also possible to inject residual vapours (72) supplied by the vapour extraction device (7) into the conduit (30). If necessary, before being injected into the conduit (30), the residual vapours are heated to the desired temperature and brought in overpressure conditions. It is also possible to use an additional injection device.

As it can be ascertained, the described process contributes to obtaining a hydrualic binder comprising a special combination of multiple crystalline phases, named "transition phases", the specific ratios thereof conferring on the binder performances and characteristics that prove to be superior to the combinations of phases knwon in the state of the art.

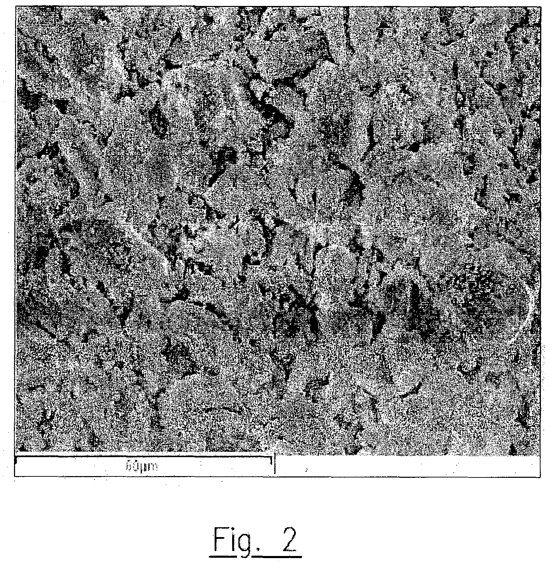

With reference to fig. 2, the hydraulic binder particles have a structure characterized by big compact crysals which do not allow the water molecules specific to the particles external environment humidity to pass. Comparatively, the metastable anhydrite III particle crystals are smaller and more spaced apart, so that the water molcules can penetrate easily thereamong during the binder rehydration process.

The invention also relates to a composition comprising hydraulic binder according to the invention in a ratio ranging from 25% to 50% by weight and an agent liable to release alumina in a ratio ranging from 50% to 75% by weight.

The hydraulic binder associated with an agent liable to release alumina may be used for manufacturing refractory materials or the materials for passive protection against fires.

Among the agents liable to release alumina there may be used calcined bauxite, calcined refractory clay, calcined or tubular alumina, refractory burnt fire clay, pearlite, vermiculitte, bentonite, magnesite, dolomite, slag, white or brown corundum kerphalite; alumina hydrate, recicled asbestos, aluminous fused cement etc.

The agent liable to release alumina may be a granulate based on alumina. The hydraulic binder based on anhydrite III and the granulate based on alumina normally react in a ratio of about 3 - 5 moles of anhydrite III to about 2 - 4 moles of alumina, preferably 4 moles of anhydrite III with 3 moles of alumina.

Moreover, the hydraulic binder according to the invention may be used as additive material for gypsum α and β, this binder conferring on the additivated gypsum increased strength and reduced setting time.

The binder may also be used as a filling material for strengthening various types of mortars as well as concrete based on cement. Dependening on the desired performances, the amount of binder will be of 5 - 70% by weight.

Another object of the invention is the use of the claimed hydraulic binder as an absorbent for depolluting the discharges of hydropollutants in solid or liquid environment.

The invention also relates to the use of the claimed hydraulic binder as an absorbent in a process for depolluting the discharges of hydropollutants, both from solid and liquid environments. Based on the last statistics cited, for example, in the US patent 5244503, it is annually estimated that the amount of products polluting the seas and oceans is of about 6 million tons, of which 35% results from oil-tankers (25% from cleaning the same and 10% from accidents); 10% from natural sources, 1% from sea drilling. The majority of the quantity reaches the seas and oceans from the land, through rivers, rains etc.

In order to avoid ecological catastrophes, endeavours are made in the entire world to lower the polution with earth oil products.

In the state of the art there are described various processes for decontaminating the effluents from earth oil products, systematized, for example, in the international patent application PCT 87/02595, in the patent application PCT 88/04193, in the patent application FR 2487690, in the RO patent 79116.

One of the processes for depolluting the discharges of hydropollutants based on hydrocarbons consists in using chemical products, a particular case being that of using absorbent substances for separating the polluting substance/substances. By absorption it is meant the penetration and the more or less uniform distribution of a substance within the total mass of a substance; the substance that absorbs is called absorbent and the substance to be absorbed is called absorbate.

Processes for recovery/removal of heavy crude-oil with different compounds of calcium are disclosed, e. g. in the European patent EP 0345668, in the patent application FR 2655349 and in the patent DE 4108089.

In EP 0345668 there is disclosed a process for removing the earth oil residues from the region of the shores, by lowering the heavy crude-oils viscosity by addition of anhydrous lime, which in contact with the water produces a powerful heat discharge. As a consequence of lowering the viscosity, the crude-oil absorption may be made easily by means of some granular materials. It can be ascertained that in this patent, the used material based on calcium is not a proper absorbent, but a substance that aids to improving the action of the used absorbents.

In the patent application FR 2655349, there is disclosed a process for neutralizing the liquid or solid environments polluted by discharges of hydrocarbons wherein calcium sulphate is spread onto the polluted surface, being at least partly dehydrated and resulting from the partial dehydration of natural gypsum by thermal treament at a temperature ranging from 100°C to 170°C, preferably ranging from 130°C and 160°C. A powdery product with a granulation of 1 - 100 micron, preferably 2 - 50 micron is obtained, said product being sprayed onto the surface polluted with heavy hydrocarbons, the sprayed product abosorbing the pollutant.

In DE 4108089 there is described a process for depolluting solid or liquid environments polluted by discharges of heavy hydrocarbons. In this case a powder of hemihydrate of gypsum is used, this being pulverised in one or several layers, having a thickness of 0.5 - 3 cm, onto the polluted region. According to this patent, in case of soil contamination, there is indicated the spraying with water in order to create a crust of porous gypsum capable to absorb the pollutant hydrocarbon. The wetting may be omited if there is humidity enough to form a dihydrate. Also, according to this patent, the amount of used material depends on the thickness of the black tide layer, but as a rule this shall be of 2 - 4 times bigger than the amount of pollutant material. Since the specific weight of the earth oil is 0.7 - 0.95 g/cm³, this floats onto the sea surface, whereas the gypsum density is of 1,8 g/cm³. Consequently, after having absorbed the polluting material, this settles down to the bottom of the sea, to be extracted or covered with other materials in order to prevent the disaggregating of the calcium sulphate aggregates and thereby the repolluting of the environment.

The main advantage of these two processes consists in the fact that the hemihydrate of calcium sulphate with big rehydration potential in humid environment is used, which may rapidly depreciate before the use for removing the black tides from the ocean and sea regions. On the other hand, both processes also have the disadvantage that the calcium sulphate aggregates impregnated with the absorbed hydrocarbons settle down to the water bottom (of the ocean or sea), and become a source of pollution.

In case of the present invention, the absorbate is mainly represented by the discharges of hydrocarbons into liquid environment, particularly the sea or ocean water, or onto the soil surface, and the absorbent is represented by the hydraulic binder based on calcium sulphate according to the invention, said binder comprising 60% and 80% by weight stabilized soluble anhydrite III, from 10% to 30% by weight soluble anhydrite II, from 8% and 25% by weight low soluble anhydrite 11 and impurities between 0% and 55 by weight.

The hydraulic binder used for depolluting has a fine grain size, in the range of 5-50 micon preferably 6 - 8 micron.

The hydraulic binder employed as an absorbent can be additivated, for example with surface active agents, dispersing agents or flocculating agents to help breaking up the hydropollutants spots.

The process for depolluting the hydropollutants discharges, using as an absorbent the hydraulic binder according to the invention, consists in spraying, in a sufficient amount, onto the polluted material layer, the hydraulic binder according to the invention, optionally with addition of additives, thereafter followed by the recovery of the aggregates formed after rehydration, which embed the pollutant material. The recovery of the formed aggregates may be done for example by filtration, or by means of mobile meshes fastened on the dams confining the polluted region, or by absorption by means of large capacity pumps.

Unlike the absorbent material used in the depolluting processes disclosed in the patent given in the state of the art, FR 2733496 and DE 4108089, the hydraulic binder according to the invention has high hygroscopicity being used for depolluting in a much smaller amount than the one necessary in case of the mentioned processes. The hydraulic binder according to the invention has also a reduced potential of rehydration in humid environment, thereby its shelf life is very good, allowing to be stored in sacks for a period of over 8 months without significantly modifying its properties. Consequently, this does not depreciate before use, even if stored for longer periods of time in the proximity of the polluted regions.

Also, the anhydrite particles in the ratios according to the invention, aggregate particularly quickly and absorbe together with the water also the pollutant hydrocarbons, incorporating them into aggregates with a high mechanical strength, the risk of pollution through disaggregation being significantly reduced.

Upon the contact with the polluted water, the hydraulic binder used as an absorbent forms aggregates (gravel or a crust) with the specific weight generally between 1100 - 1300 kg/m³, embedding by absorption into its mass, an amount of hydropollutant much higher than the similar absorbent materials known in the state of the art.

Being denser than water, the formed aggregate tends to sink, so that it can be recovered, for example, by means of mobile meshes with sufficiently fine mesh size, fastened on the elements constituting the floating dams, loaded into special ships and removed much easier from the polluted area. Also, the mixture of water and aggregate containing the pollutant material can be absorbed by means of high flow rate pumps and thereafter passed through some filters, the water being discharged and the pollutant material containing aggregates being retained to be removed.

In case of black tides, in order to estimate correctly the necessary amount of hydraulic binder according to the invention used as absorbent, it is preferred to previously subdivide the oil spot into zones surrounded by floating dams, and then the absorbent material is sprayed.

The process for depoluting the hydropollutants discharges as described, may be used both for depolluting the hydropollutant discharges, such as light hydrocarbons (with up to 10 carbon atoms), or heavy hydrocarbons (with more than 10 carbon atoms), for example light earth oil, heavy earth oil, oils etc, but also for removing other similar pollutants which contain water at lolecular level, for example fats, greases, other liquid or semi-liquid chemicals.

The process may be applied both in liquid environments, such as sea waters, lacustrian or flowing waters, industrial, household etc, as well as on solid environments, such as beaches, land, floors etc.

Another object of the invention is represented by a use of the hydraulic binder comprising from 60% to 80% by weight of stabilized soluble anhydrite III, from 10% to 30% by weight of soluble anhydrite II, from 8% to 25% by weight of low-soluble anhydrite II and impurities from 0% to 5% by weight, in a process for repairing roads. The inventors of the present invention unexpectedly and surprisingly noticed that the hydraulic binder according to the invention may also be used for repairing the roads, the landing tracks for airplanes included, by means of a rapid process which does not involve an extended interruption of the traffic and in any meteorogical conditions, even at extreme temperatures (heat or cold), in conditions of raining or snowing.

A first process for repairing roads in compliance with the invention comprises the step of cleaning the holes of the material detached on a depth of at least 5 cm, followed by laying a layer of washed river aggregates of 8 -16 mm size, preparing a fluid microconcrete from the hydraulic binder according to the invention, additivated previously with fluidizing, plasticizer and retarding agents, together with sand, Portland cement and polypropylene fibres, casting the fluid microconcrete onto the aggregate layer, placing a layer of small aggregates of 3-8 mm size at the surface of the zone to be repaired.

The fluid microconcrete prepared this way has the capacity of filling integrally all empty spaces, embedding all granules of aggregate.

Unlike the repairs presented in the state of the art which fail easily by degradation of the filling material, mostly at low temperatures, the technology described above, wherein the claimed hydraulic binder is used, ensures the possibility of repairing rapidly any structural systems, not only of the traffic road, in any conditions of temperature.

Another process of repairing roads by means of the hydraulic binder according to the invention involves the previous preparation of a mixture of hydrauic binder as claimed by the invention, additivated previously with self-leveling fluidizing agent and retarding agent, together with small aggregates with the size of 8-16 mm and water, for example in a mixing pump, folllowed by the application of this mixture directly into the holes in the roadway.

This process does not require previous cleaning of the holes, and the microconcrete thus prepared has a high setting rate, without being affected by the meterological conditions. The process may be applied for road repairing and airplane landing tracks included.

Due to the step of preparation of the microconcrete outside the roadway and not being necessary to prepare the holes, this process does not imply the traffic interruption and may be successfully applied even under raining or snowing conditions.

## Claims

1. Hydraulic binder based on calcium sulphate, **characterized in that** it comprises stabilized soluble anhydrite III in a ratio ranging from 60% to 80% by weight, soluble anhydrite II in a ratio ranging from 10% to 30% by weight, low-soluble anhydrite II in a ratio ranging from 8% to 25% by weight and impurities ranging from 0% to 5% by weight.

2. Hydraulic binder according to claim 1, wherein the stabilised soluble anhydrite III content ranges from 70% to 75% by weight.

3. Hydraulic binder according to claim 1, wherein the soluble anhydrite II content ranges from 15% to 25% by weight.

4. Hydraulic binder according to claim 1, wherein the low soluble anhydrite II content ranges from 15% to 20% by weight.

5. Composition comprising binder according to any of the claims from 1 to 4, in a ratio ranging from 25% to 50% by weight and an agent liable to release alumina in a ratio ranging from 50% to 75% by weight,

6. Process for the preparation of a hydraulic binder according to any one of the claims from 1 to 4, **characterized by**
• introducing the powdery composition based on calcium sulphate into an impacting conduit containing overheated air;
• heating the said composition to a temperature ranging from 320°C to 380°C, in conditions of overpressure from 50 to 100 mbar;
• impacting the binder particles against the conduit walls, by passing a warm air stream with an air stream velocity ranging from 10 to 25 m/s.

7. Process according to claim 6, **characterized in that,** in step c) the said composition is heated to 350°C.

8. Process according to claim 6 or 7, **characterized in that** in step c) the said composition is heated in conditions of overpressure from 60 to 80 mbar.

9. Use of the hydraulic binder according to any one of the claims 1 to 4, as an absorbent material for depolluting the hydropollutant discharges from a solid or liquid environment.

10. Use of the hydraulic binder according to any one of the claims 1 to 4 in a process for depolluting a liquid or solid environment polluted with hydropollutants discharges, wherein the hydraulic binder is sprayed in a sufficient amount onto the pollutant material surface, followed by the recovery of the binder and the so formed pollutant material aggregates by rehydration,

11. Use of the hydraulic binder according to claim 10, wherein said hydraulic binder isadditivated with one or more of the following; surface active agents, dispersing agents or flocculating agents.

12. Use of the hydraulic binder according to any one of the claims 1 to 4 in a process for road repairing, **characterized by** the following steps:
• cleaning the holes of the material detached on a depth of at least 5 cm;
• placing a layer of washed river gravel with a size of 8-16 mm into the cleaned holes;
• preparing a fluid microconcrete of said hydraulic binder previously additivated with fluidizing, plasticising and retarding agents, together with sand, Portland cement and polypropylene fibres;
• casting the fluid microconcrete onto the aggregate layer;
• placing a layer of aggregates with a size of 3-8 mm onto the repaired surface.

13. Use of the hydraulic binder according to any one of the claims 1 to 4 in a process for road repairing, **characterized by** the following steps:
• preparing a mixture of said hydraulic binder previously additivated with self-levelling, fluidising and retarding agents, together with small aggregates with the size oF 8-16 mm and water;
• applying this mixture directly into the roadway holes.

## Patentansprüche

1. Hydraulisches Bindemittel auf der Basis von Calciumsulfat, **dadurch gekennzeichnet, dass** es stabilisiertes lösliche Anhydrit III in einem Verhältnis von 60 bis 80 Gew.-% löslichem Anhydrit II in einem Verhältnis von 10 bis 30 Gew .-%, niedrigläslichem Anhydrit II, enthält In einem Verhältnis von 8 bis 25 Gew .-% und Verunreinigungen im Bereich von 0 bis 5 Gew.-%.

2. Hydraulisches Bindemittel nach Anspruch 1, wobei der Gehalt an stabilisiertem löslichem Anhydrit III von 70 bis 75 Ges..-% reicht.

3. Hydraulisches Bindemittel nach Anspruch 1, wobei der Gehalt an löslichem Anhydrit II im Bereich von 15 bis 25 Gew.-% liegt.

4. Hydraulisches Bindemittel nach Anspruch 1, wobei der Gehalt an geringen löslichem Anhydrit II im Bereich von 15 bis 20 Gew .-% liegt.

5. Zusammensetzung, umfassend Bindemittel nach einem der Ansprüche 1 bis 4, in einem Verhältnis von 25 bis 50 Gew .-% und einem Mittel, das in der Lage ist, Aluminiumoxid in einem Verhältnis von 50 bis 75 Gew.-% freizusetzen.

6. Verfahren zur Herstellung eines hydraulischen Bindemittels nach einem der Ansprüche 1 bis 4, **dadurch gekennzeichnet, daß** man die pulverförmige Zusammensetzung auf der Basis von Calciumsulfat in eine Aufschlämmungsleitung einführt, die überhitzte Luft enthält Erwärmen der Zusammensetzung auf eine Temperatur im Bereich von 320 <'C bis 380 °C, bei Oberdruckbedingungen von 50 bis 100 mbar; Prallwirkung auf die Bindemittelpartikel gegen die Leitungswände durch Durchleiten eines warmen Luftstroms mit einer Luftstromgeschwindigkeit im Bereich von 10 bis 25 m/s.

7. Verfahren nach Anspruch 6, **dadurch gekennzeichnet, dass** in Schritt c) die Zusammensetzung auf 350 °C erhitzt wird,

8. Verfahren nach Anspruch 6 oder 7, **dadurch gekennzeichnet, dass** in Schritt c) die Zusammensetzung unter Überdruckbedingungen von 60 bis 80 mbar erwärmt wird.

9. Verwendung des hydraulischen Bindemittels nach einem der Ansprüche 1 bis 4 als absorbierendes Material zur Verschmutzung der hydroverunreinigenden Entladungen aus einer festen oder flüssigen Umgebung.

10. Verwendung des hydraulischen Bindemittels nach einem der Ansprüche 1 bis 4 in einem Verfahren zur Abscheidung einer mit verschmutzten flüssigen oder festen Umgebung, wobei das hydraulische Bindemittel in ausreichender Menge auf die Oberfläche des Schadstoffmaterials gesprüht wird, gefolgt von der Rückgewinnung Des Bindemittels und der so gebildeten Schadstoff-Aggregate durch Rehydratisierung,

11. Verwendung des hydraulischen Bindemittels nach Anspruch 10, wobei das hydraulische Bindemittel mit einem oder mehreren der folgenden substituiert ist; Oberflächenaktiven Mitteln. Dispergiermitteln oder Flockungsmitteln.

12. Verwendung des hydraulischen Bindemittels nach einem der Ansprüche 1 bis 4 in einem Verfahren zur Straßenreparatur, **gekennzeichnet durch** die folgenden Schritte:
- Reinigung der Löcher des getrennten Materials in einer Tiefe von mindestens 5 cm;
- Platzieren einer Schicht von gewaschenen Flusskiesel mit einer Größe von 8-16 mm in die gereinigten Löcher;
- Vorbereiten eines flüssigen Mikrobetons des zuvor mit Fluidisierungs-, Plastifizierungs- und Retartmitteln aktivierten hydraulischen Bindemittels zusammen mit Sand, Portlandzement und PPE - Fasern;
- Gießen des flüssigen Mikrobetons auf die Aggregatschicht;
- Platzierten einer Schicht von Aggregaten mit einer Größe von 3-8 mm auf die reparierte Fläche

13. Verwendung des hydraulischen Bindemittels nach einem der Ansprüche 1 bis 4 in einem Verfahren zur Straßenreparatur, **gekennzeichnet durch** folgende Schritte:
- Herstellen einer Mischung aus dem zuvor mit selbstnivellierenden, fluidisierenden und verzögernden Mitteln addierten hydraulischen Bindemittel zusammen mit kleinen Aggregaten mit einer Größe von 8-16 mm und Wasser;
- Diese Mischung direkt in die Fahrbahnlöcher auftragen.

## Revendications

1. Liant hydraulique à base de sulfate de calcium, **caractérisé en ce qu'**il comprend de l'anhydrite soluble stabilisée III dans un rapport allant de 60% à 80% en poids, de l'anhydrite soluble II dans un rapport allant de 10% à 30% en poids, de l'anhydrite faiblement soluble II dans un rapport allant de 8% à 25% en poids et des impuretés allant de 0% à 5% en poids,

2. Liant hydraulique selon la revendication 1, dans lequel la teneur en anhydrite soluble stabilisée III varie de 70% à 75% en poids.

3. Liant hydraulique selon la revendication 1, dans lequel la teneur en anhydrite soluble II varie de 15 % à 25 % en poids.

4. Liant hydraulique selon la revendication 1, dans lequel la teneur en anhydrite faiblement soluble stabilisée II varie de 15% à 20% en poids.

5. Composition comprenant liant selon l'une quelconque des revendications 1 à 4, dans une proportion allant de 25 % à 50 % en poids et un agent susceptible de dégager de l'alumine dans une proportion allant de 50 % à 75 % en poids

6. Procédé de préparation d'un liant hydraulique selon l'une quelconque des revendications 1 à 4, **caractérisé par**:
• l'introduction de la composition pulvérulente à base de sulfate de calcium dans un conduit d'impact contenant de l'air surchauffé;
• le chauffage de ladite composition à une température allant de 320^{<}'C à 380 °C. dans des conditions de surpression de 50 à 100 mbar;
• projeter les particules de liant contre les parois du conduit, en faisant passer un courant d'air chaud avec une vitesse du flux d'air allant de 10 à 25 m/s.

7. Procès selon la revendication 6, **caractérisé en ce que,** dans l'étape c) ladite composition est chauffée à 350°C,

8. Procédé selon la revendication 6 ou 7, **caractérisé en ce que** dans l'étape c) ladite composition est chauffée dans des conditions de surpression de 60 à 80 mbar.

9. Utilisation du liant hydraulique selon l'une quelconque de revendications 1 à 4. comme un matériau absorbant pour la dépollution des rejets de hydro-polluants d'un environnement solide ou liquide.

10. Utilisation du liant hydraulique selon l'une quelconque des revendications 1 à 4 dans un procédé de dépollution d'un environnement liquide ou solide pollué avec des rejets de hydre-polluants, dans lequel le liant hydraulique est pulvérisé dans une quantité suffisante sur la surface du matériau polluant, suivi de la récupération du liant et des agrégats de matériaux polluantes ainsi formés par réhydratation,

11. Utilisation du liant hydraulique selon la revendication 10, dans lequel ledit liant hydraulique est additivé avec un ou plusieurs des éléments suivants; agents tensio-actifs, agents dispersants ou agents floculants.

12. Utilisation du liant hydraulique selon l'une quelconque des revendications 1 à 4 dans un procédé de réparation routière, **caractérisé par** les étapes suivantes:
• nettoyer les trous du matériau détaché à une profondeur d'au moins 5 cm;
• placer une couche de gravier de rivière lavé avec une taille de 8 à 16 mm dans les trous nettoyés;
• préparer un micro-béton fluide dudit liant hydraulique, additivé préalablement avec des agents de fluidification, plastifiants et retardateurs, avec du sable, du ciment Portland et des fibres de polypropylène;
• couler le micro-béton fluide sur la couche d'agrégat;
• Placer une couche d'agrégats d'une taille de 3-8 mm sur la surface réparée.

13. Utilisation du liant hydraulique selon l'une quelconque des revendications 1 à 4 dans un procédé de réparation routière, **caractérisé par** les étapes suivantes:
• préparer un mélange dudit liant hydraulique préalablement additivé avec des agents auto-lissants, de fluidifications et retardeurs, avec petits agrégats de 8 à 16 mm et de l'eau.
• appliquer ce mélange directement dans les trous de la chaussée,
